# EUROPEAN PATENT SPECIFICATION

(11) **EP 2 720 402 B1**
(45) Date of publication and mention of the grant of the patent: **04.04.2018**
(21) Application number: 12306245.7
(22) Date of filing: 12.10.2012
(51) Int. Cl.: H04L 9/00, G09C 1/00

(54) **Hardware encryption and decryption apparatus using a N round aes algorithm**
Hardware-Verschlüsselungs- bzw. -entschlüsselungsvorrichtung mit einem N-Runden AES-Algorithmus
Dispositif matériel de chiffrement et de déchiffrement utilisant un algorithme AES à N tours

(43) Date of publication of application: 16.04.2014
(73) Proprietor: X-FAB FRANCE, 91105 Corbeil Essonnes (FR)
(72) Inventor: Portella Do Canto, Rodrigo, 91100 Corbeil Essonnes (FR); Korkikian,, Roman, 75018 paris (FR)
(74) Representative: Hervouet-Malbec, Sylvie

(56) References cited:
- AMAAR A ET AL: "Efficient Implementation of AES Algorithm Immune to DPA Attack", COMPUTER MODELLING AND SIMULATION (UKSIM), 2012 UKSIM 14TH INTERNATIONAL CONFERENCE ON, IEEE, 28 March 2012 (2012-03-28), pages 396-401, XP032184901, DOI: 10.1109/UKSIM.2012.110 ISBN: 978-1-4673-1366-7
- K. WU ET AL: "Idle cycles based concurrent error detection of RC6 encryption, [FPGAs]", PROCEEDINGS 2001 IEEE INTERNATIONAL SYMPOSIUM ON DEFECT AND FAULT TOLERANCE IN VLSI SYSTEMS, 30 November 2001 (2001-11-30), pages 200-205, XP55058744, DOI: 10.1109/DFTVS.2001.966771 ISBN: 978-0-76-951203-7
- "Announcing the Advanced Encryption Standard (AES)", INTERNET CITATION, 26 November 2001 (2001-11-26), XP002452709, Retrieved from the Internet: URL:http://csrc.nist.gov/publications/fips /fips197/fips-197.pdf [retrieved on 2007-09-26]

## Description

The present invention relates generally to the field of hardware cryptographic apparatus, and, more particularly, to hardware encryption and/or decryption apparatus which use a N-round Advanced Encryption Standard, or AES, algorithm.

AES algorithm is a symmetric block cipher that can process data blocks of 128 bits using cipher keys with lengths of 128, 192 or 256 bits. The different sizes of the cipher key result in different numbers of rounds to be performed during the execution of the algorithm: the number N of rounds is equal to ten when the key is 128 bits long, to twelve when the key is 192 bits long and to fourteen when the key is 256 bits long. In each round, a new key (round key) is generated based on the original cipher key using a routine called KeyExpansion. The final output (ciphertext) is calculated through rounds (10, 12 or 14) that use four transformations functions:
- AddRoundKey function, which adds the data block to the round key using an XOR operation;
- SubBytes function, which corresponds to a non-linear byte substitution using a substitution table SBox;
- ShiftRows function, which cyclically shifts the last three rows over different number of bytes; and
- MixColumns function, which corresponds to a multiplication over GF(2⁸) by a fixed polynomial.

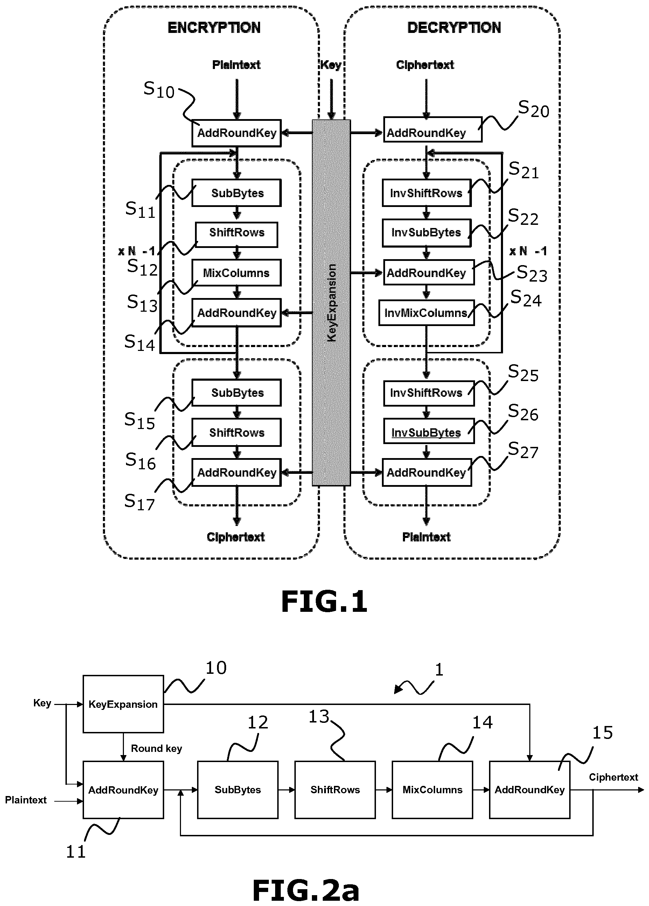

As shown in the left part of figure 1, which is a flow diagram of the AES algorithm, an initial AddRoundKey process (step S₁₀) is performed on a received plaintext. Then, (N-1) rounds are applied, with N equal to ten, twelve or fourteen depending on the Key length, where each round successively perform the SubBytes function (step S₁₁), the ShiftRows function (step S₁₂), the MixColumns function (step S₁₃) and the AddRoundKey function (Step S₁₄). The last round of the encryption process differs slightly from the first (N-1) rounds in that it only performs successively a SubBytes function (step S₁₅), a ShiftRows function (step S₁₆) and an AddRoundKey function (step S₁₇) for delivering the corresponding ciphertext. Hence, all the rounds are identical, except the last one which does not include the MixColumns transformation.

The SubBytes, ShiftRows and MixColumns transformations presented above can be inverted respectively in InvSubBytes, InvShiftRows and InvMixColumns transformations, while the AddRoundKey transformation is identical to its inverse. All the inverse transformations can thus be implemented in reverse order to recover the plaintext from the ciphertext. Hence, as shown in the right part of figure 1, which illustrates a flow diagram of the inverse cipher for AES algorithm, an initial AddRoundKey process (step S₂₀) is performed on a received ciphertext. Then, (N-1) rounds are applied, with N equal to ten, twelve or fourteen depending on the Key length, where each round successively perform the InvShiftRows function (step S₂₁), the InvSubBytes function (step S₂₂), the AddRoundKey function (step S₂₃) and the InvMixColumns function (Step S₂₄). The last round of the decryption process differs slightly from the first (N-1) rounds in that it only performs successively an InvShiftRows function (step S₂₅), an InvSubBytes function (step S₂₆) and an AddRoundKey function (step S₂₇) for delivering the corresponding plaintext.

Typically, as shown in figure 2a, a hardware encryption apparatus 1 using the N-round AES algorithm disclosed above is classically composed by an initial AddRoundKey hardware module 11 followed by a set of four successive hardware modules, namely in the order, a SubBytes module 12, a ShiftRows module 13, a MixColumns module 14 and a second AddRoundKey module 15. This set of four hardware modules has a feedback connection between second AddRoundKey module 15 and SubBytes module 12 and represents one round of AES. Therefore, the iterative set will run 10, 12 or 14 times (according to the size of the key) in order to output the cipher text. Hardware KeyExpansion module 10 is responsible for feeding first AddRoundKey module 11 and then second AddRoundKey module 15 with a new key for each round.

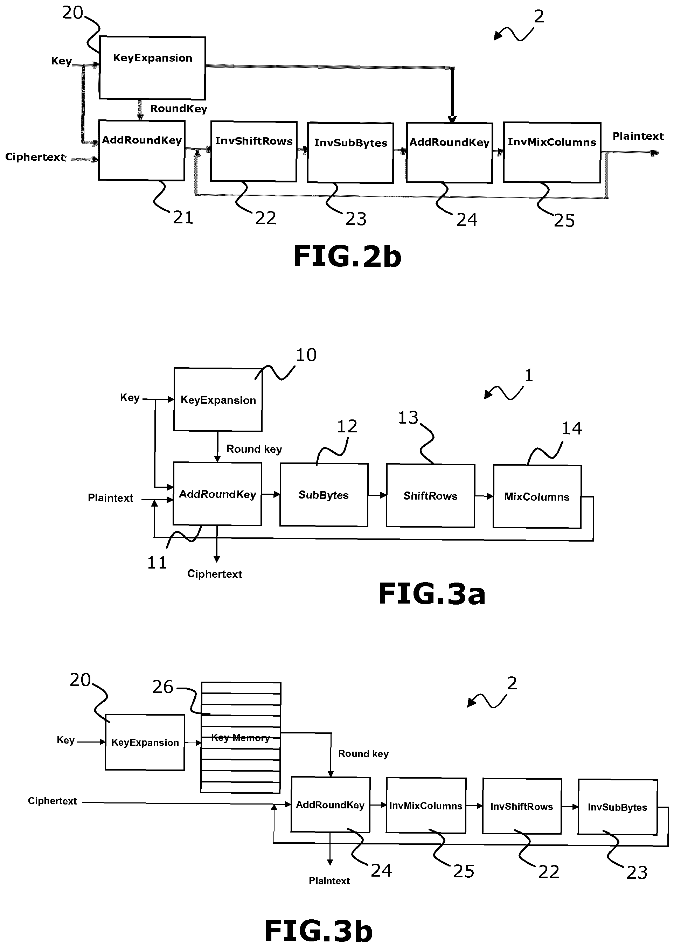

Similarly, as shown in figure 2b, a hardware decryption apparatus 2 using the N-round AES algorithm presented above is composed, by an initial AddRoundKey hardware module 21 followed by a set of four successive hardware modules, namely in the order, an InvShiftRows module 22, a InvSubBytes module 23, a second AddRoundKey module 24 and an InvMixColumns hardware module 25. This set of four hardware modules 22 to 25 has a feedback connection between InvMixColumns module 25 and InvShiftRows module 22, and represents one round of AES. Therefore, the iterative set will run 10, 12 or 14 times (according to the size of the key) in order to output the plaintext. Hardware KeyExpansion module 20, which can be module 10 of figure 2a if encryption and decryption apparatus are located on a same chip, is responsible for feeding first AddRoundKey module 21, and then second AddRoundKey module 24 with a new key for each round.

One known problem in hardware cryptographic architectures implementing the AES algorithm is that they handle secret information that is the target for a great sort of attacks. Typically, this information is represented by a physical process through electrical signals that can be measured or forced by an attacker.

To disclose secret information, such as the secret key, an attacker can correlate physical signals (taken from the device) and binary data. This is called Side-Channel Attacks (SCA). One type of SCA, called Differential Power Analysis (DPA), exploits differences on chip's power consumption to guess the correct value of the key bits.

In other way, the attacker can force signals through the device which will most likely lead to faults or errors in the operation. This is known as fault attack. Properly induced faults during a cryptographic algorithm can reveal the secrecy, such as the secret key, via the comparison between correct and faulty results.

In order to prevent hardware attacks, cryptographic community has already offered various countermeasures. Apart from significant design penalties, some countermeasures protect the implementation against one type of attack, while opening a possibility for another:

Double encryption, as a fault attack protection, is one of the examples, because it introduces doubled power consumption and therefore improves the possibility of SCA. For instance, US 7,694,156 addresses a fault attack AES countermeasure composed of two circuits processing the same input: A first circuit takes an input and performs SubByte, ShiftRow, MixColumns, AddRoundKey and InvMixColumns. The last operation eliminates previous MixColumns procedure and the result is used as a reference. The signal after AddRoundKey operation is considered as a round output. In parallel another circuit processes the same input with SubBytes, ShiftRows and AddRoundKey operation, so the result can be compared with the reference signal from the first circuit. If results are not the same then it is assumed that an error has been induced. The drawback of this solution is exactly the power increase of the circuit that can be used as leverage by a DPA attacker.

Masking is another example of a countermeasure that leads to other weaknesses. Mask changing causes a computational error that can itself be exploited by the attacker.

One manner of mitigating fault-based side channel attacks is an operation-level Concurrent Error Detection, or CED, such as disclosed in Document "Fault-based Side-Channel Cryptanalysis Tolerant Rijndael Symmetric Block Cipher Architecture" from Ramesh Karri et al.(Proceedings of the 2001 IEEE International Symposium on Defect end Fault Tolerance in VLSI Systems (DFT'01) 1063-6722/01). In this document, both cipher and decipher circuits are present on the same chip, and the inverse block functions of the decipher circuit are used to check the computation of the AES cipher blocks and vice-versa. In other words, when AES cipher is working, decipher blocks are performing the cross-checking operation; when decipher blocks are computing, AES cipher architecture is responsible for permanent fault detection. Although this architecture allows the detection of both permanent and transient errors which might occur in any cipher/decipher block of the architecture, DPA attacks cannot be detected. In addition, encryption and decryption circuits need to be on the same chip, which is not always the case.

Document "Efficient Implementation of AES Algorithm Immune to DPA Attack" (Amaar et al, Computer Modelling and simulation (UKSIM), 2012 UKSIM 14th international conference on modelling and Simulation, IEEE, 28 March 2012, pages 396-401, XP032184901) discloses a hardware encryption apparatus according to preamble of claim 1, adapted for fighting against DPA.

As seen above, proposed known countermeasures target either side-channel or fault attacks and cannot be considered as a comprehensive solution.

Needed then is a manner of protecting an encryption and/or decryption hardware apparatus against two of the most common ways of attacking a cryptography chip, namely against DPA and fault attacks. Another aim is to propose a configurable solution for the AES design which enables the user to adjust the circuits according to his needs with respect to security.

In accordance with a first aspect, the present invention provides a hardware encryption apparatus according to claim 1.

According to some embodiments:
- said control means comprise at least a tri-state buffer connected between first and second hardware modules, or respectively between second and third hardware modules, or third and fourth hardware modules, or fourth and first hardware modules, said tri-state buffer being adapted to be held in a high-impedance state for controlling said at least one of the hardware modules in the set to generate said scrambling power.
- said control means comprise means for delivering at least one random or pseudo-random signal as input signal to said at least one of the hardware modules in the set during said clock cycle distinct from associated first, respectively second, third or fourth encryption periods, so that said at least one of the hardware modules in the set processes said at least one random or pseudo-random signal and outputs a scrambled power signal.
- said control means are adapted to have said at least one another hardware module in said set to reprocess, during said one clock cycle, the same input signal having been processed by said at least one another hardware module during its associated encryption period immediately preceding said one clock cycle, and to deliver a transient error detection signal constituting said particular signal when a result of the processing during the associated period does not match with a result of the re processing during said one clock cycle.
- said control means comprise said sequencing means further adapted for having said iterative encryption pipelined 4-block structure to encrypt a predetermined input signal into an encrypted test signal during a test processing using said N-round based AES algorithm, wherein each of the first, respectively second, third and fourth hardware module is successively used, during a clock cycle distinct from its associated first, respectively second, third or fourth encryption period, for delivering said particular signal as first, respectively second, third, or fourth output signal, and wherein, at the end of said test processing, a transient or permanent error detection signal is delivered when said encrypted test signal does not match with a stored predetermined value.

In accordance with a second aspect, the present invention provides a hardware decryption apparatus according to claim 6.

Said hardware decryption apparatus may be on the same chip as said hardware encryption apparatus.

In accordance with a third aspect, the present invention provides a method for controlling a hardware encryption apparatus according to claim 8.

In accordance with a fourth aspect, the present invention provides a method for controlling a hardware decryption apparatus according to claim 9. Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

Some embodiments of apparatus and/or methods in accordance with embodiments of the present invention are now described, by way of example only, and with reference to the accompanying drawings, in which:
- Figure 1 is a flow diagram illustrating a method for encrypting and decrypting data according to the well-known N-round AES algorithm;
- Figure 2a, respectively 2b, is a block circuit diagram of a known hardware encryption, respectively decryption, apparatus;
- Figure 3a, respectively 3b, is a new block circuit diagram of a hardware encryption, respectively decryption, apparatus, upon which the present invention is based;
- Figure 4 schematically illustrates the states of modules in encryption apparatus of figure 3a, during four successive clock cycles corresponding to first to fourth encryption periods of these modules in a first round;
- Figure 5 shows a first possible embodiment for a hardware encryption apparatus according to the invention;
- Figure 6 shows a second possible embodiment for a hardware encryption apparatus according to the invention ;
- Figure 7 illustrates a variant of the second embodiment for a hardware encryption apparatus according to the invention;
- Figure 8 illustrates the principle of self-checking used in a third embodiment for a hardware encryption or decryption apparatus according to the invention ;
- Figure 9 schematically illustrates the states of modules in an encryption apparatus according to third embodiment, during four successive clock cycles corresponding to first to fourth encryption periods of these modules in a first round;
- Figure 10 schematically illustrates the states of modules in an encryption apparatus according to a fourth embodiment, during the four successive first clock cycles of an encryption process.

Figure 3a shows a hardware encryption apparatus 1 adapted to encrypt an original input signal into an encrypted output signal using a N-round - Advanced Encryption Standard, AES, algorithm, but whose structure is slightly modified from the typical known architecture of figure 2a.

Encryption apparatus 1 comprises:
- a hardware KeyExpansion module 10 adapted to generate a round key based on an input key,
- an iterative encryption pipelined 4-block structure comprising:
   o a first hardware module 11 designated to execute an AddRoundKey function XORing a first input signal with a second input signal and to deliver a result of said AddRoundKey function as a first output signal,

Hence, second AddRoundKey module 15 of figure 2a has been removed from encryption apparatus 1 of figure 3a, and connections have been properly modified between hardware modules in order to deliver the correct AES encryption.

In order to have apparatus 1 performing steps S₁₀ to S₁₇ of figure 1 according to the N-round AES algorithm to encrypt a plaintext or original input signal into a ciphertext or encrypted output signal, we have to consider now that one round corresponds to the successive operations of first to fourth hardware modules 11 to 14. Sequencing means (not shown in figure 3a) control thus iterative encryption pipelined 4-block structure according to the following rules:
- for each round, said first to fourth hardware modules 11-14 encrypt successively their respective input signals, during associated respective first to fourth encryption periods in four successive clock cycles. Third input signal corresponds consequently to the first output signal, while fourth input signal is the second output signal and fifth input signal is the third output signal;
- for the first round, said first input signal is said plaintext or original input signal and said second input signal is said input key; hence, with reference to figure 1, the first round for apparatus 1 performs successively step S₁₀ and first occurrence of steps S₁₁, S₁₂ and S₁₃;
- for each subsequent round until the last round, said first input signal is said fourth output signal and said second input signal is a round key generated by the KeyExpansion hardware module; this corresponds to successive steps S₁₄, S₁₁, S₁₂ and S₁₃ of figure 1;
- for the last round, said first input signal is said third output signal transmitted by said fourth hardware module 14 (directly, i.e. without transformation); this corresponds to successive steps S₁₄, S₁₅ and S₁₆;
- an additional passage (one clock cycle more) through first AddRoundKey module 11 is needed for calculation corresponding to last step S₁₇ of figure 1 and delivery of the encrypted output signal;
- hardware KeyExpansion module 10 generate a new round key at each four-clock cycle.

In a similar manner, figure 3b shows a hardware decryption apparatus 2 for decrypting said ciphertext or encrypted output signal into said plaintext or original input signal, but whose structure is slightly modified from the typical known architecture of figure 2b.

Decryption apparatus 2 now comprises:
- a hardware KeyExpansion module 20 adapted to generate a round key based on the input key,
- an iterative decryption pipelined 4-block structure comprising:
   ∘ a first hardware module 24 designated to execute an AddRoundKey function XORing a first input signal with a second input signal and to deliver a result of said AddRoundKey function as a first output signal,
   ∘ a second hardware module 25 adapted to receive a third input signal, to execute an Inverse MixColumns function on said third input signal and to deliver a result of said Inverse MixColumns function as a second output signal,
   ∘ a third hardware module 22 adapted to receive a fourth input signal, to execute an Inverse ShiftRows function on said fourth input signal and to deliver a result of said Inverse ShiftRows function as a third output signal, and
   ∘ a fourth hardware module 23 adapted to receive a fifth input signal, to execute an Inverse SubBytes function on said fifth signal and to deliver a result of said Inverse SubBytes function as a fourth output signal.

Because hardware decryption apparatus 2 needs the round keys in the opposite way of hardware encryption apparatus 1, all the keys must be calculated earlier in the process and stored in a key memory 26, as represented in Figure 3b.

When comparing figure 3b with figure 2b, one can notice that AddRoundKey module 21 of figure 2b has been removed from decryption apparatus 2 of figure 3b. In addition, the entry of the structure is now the AddRoundKey module 24, and connections have been properly modified between hardware modules in order to deliver the correct AES decryption.

As a consequence, in order to have apparatus 2 performing steps S₂₀ to S₂₇ of figure 1 according to the N-round AES algorithm, we have to consider now that one round corresponds to the successive operations of first to fourth hardware modules 24, 25, 22 and 23. Sequencing means (not shown in figure 3b) now control iterative decryption pipelined 4-block structure according to the following rules:
- for each round, said first to fourth hardware modules decrypt successively their respective input signals, during associated respective first to fourth decryption periods in four successive clock cycles. Third input signal of the decryption pipelined 4-block structure corresponds consequently to the first output signal, while fourth input signal is the second output signal (except for the first round), and fifth input signal is the third output signal;
- for the first round, said first input signal is said encrypted output signal, said second input signal is a first round key and fourth input signal is the first output signal transmitted by InvMixColumns module 25 (directly, i.e. without transformation); hence, with reference to figure 1, the first round for apparatus 2 performs successively step S₂₀ and first occurrence of steps S₂₁ and S₂₂;
- for each subsequent round including the last round, said first input signal is said fourth output signal and said second input signal is a round key; this corresponds to successive steps S₂₃, S₂₄, S₂₁ and S₂₂, and for the last round, to last occurrence of steps S₂₃, S₂₄ followed by steps S₂₅ and S₂₆ of figure 1;
- an additional passage (one clock cycle more) through first AddRoundKey module 21 is needed for calculation corresponding to last step S₂₇ of figure 1 and delivery of the plaintext;
- hardware KeyExpansion module 20 generates a new round key at each four-clock cycle.

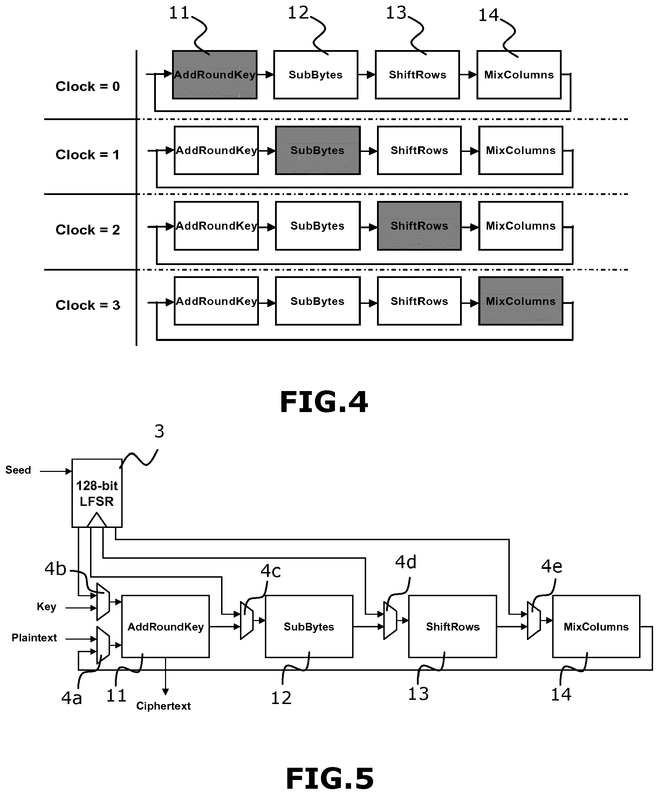

Typically, in both pipelined 4-block structures according to figures 3a and 3b, only one hardware module over the four is running at a time when only one plaintext/ciphertext is given at the input. In other words, three hardware modules are simultaneously idle at a time, meaning that they are not involved in the encryption/decryption process. This scenario is presented for the case of the encryption process in Figure 4 which illustrates the states of modules 11 to 14 during four successive clock cycles corresponding to first to fourth encryption periods of modules 11 to 14 in a first round: In clock = 0, first module 11 (shown in grey) is processing key and plaintext that will be output at clock = 1 for the second module 12 of the chain to compute. At clock = 1, second module 12 is computing and, at clock = 2, third module 13 is processing the algorithm. Therefore, for each clock cycle, only one module in grey is processing real information while three modules in white are not processing real information.

It appears however that the hardware modules, although in idle mode, actually process some partial data, more particularly previous data from previous round, which can potentially leak secret information.

According to the invention, this potential leak of information is prevented from occurring by enabling the modules to be configured in different ways during periods corresponding to their respective idle mode, so that they can, instead of being in a classical idle mode:
- either generate a scrambling power, thus reducing the sensitivity of the encryption, respectively decryption, apparatus to DPA;
- or participate to a checking process to output a particular signal for use in detection of a fault attack against the corresponding pipelined 4-block structure.

Several embodiments implementing either DPA or fault attack countermeasures according to the invention are now disclosed:

### a. DPA Countermeasures:

Two possible ways of controlling modules 11 to 14 pertaining to the encryption pipelined 4-block structure to have them generating a scrambling power will now be described in reference to figures 5 to 7:

### a.1. Random or pseudo random signal processing

According to a first possible embodiment shown in figure 5, each of the first to fourth hardware modules 11-14 receives an injection of random or pseudo random signal during clock cycles which are distinct from associated first, respectively second, third or fourth encryption periods, and processes the received signal to output a scrambled power signal.

To this end, encryption apparatus 1 of figure 3a is modified to incorporate five multiplexers 4a to 4e connected respectively between first and second hardware modules, between second and third hardware modules, between third and fourth hardware modules, and between fourth and first hardware modules. The random or pseudo random signal may be generated by any random or pseudo random generator, for instance a Linear Feedback Shift Register, LSFR, 3 that will randomly count from 0 to 2¹²⁸-1 depending on a receiving seed.

Each multiplexer 4a to 4e is adapted to deliver, under the control of sequencing means (not shown), the random or pseudo-random signal as input signal to said first, respectively second, third or fourth hardware module only when these modules are not in their encryption respective period. For instance:
- at Clock = 0 shown in figure 4, which corresponds to the first encryption period associated to first module 11:
   ∘ multiplexers 4a and 4b are controlled to deliver Input key and plaintext to first module 11;
   ∘ multiplexers 4c, 4d and 4e are controlled to deliver random or pseudo random signal coming from LSFR 3 to module 12, module 13 and module 14 respectively.
- at Clock = 1 shown in figure 4, which corresponds to the second encryption period associated to second module 12:
   ∘ multiplexer 4c is controlled to deliver output of first module 11 to second module 12;
   ∘ multiplexers 4a, 4b, 4d and 4e are controlled to deliver random or pseudo random signal coming from LSFR 3 to module 11, module 13 and module 14 respectively.

Thanks to this working, it is very difficult for a potential attacker to derive any information from a power analysis.

Multiplexers don't need to receive simultaneously the same random or pseudo random signal. In some embodiments, three or four among the five multiplexers receive simultaneously distinct random or pseudo random signals.

In addition, it is not compulsory to have a multiplexer for each of the modules. For some embodiments, it can be sufficient to deliver at least one random or pseudo-random signal as input signal to at least one of said first to fourth hardware modules during said clock cycle distinct from associated first, respectively second, third or fourth encryption periods, so that said at least one of said first to fourth hardware processes said at least one random or pseudo-random signal and outputs a scrambling power signal.

In addition, even if several multiplexers are actually present on the chip, only some of them can be operated to work as indicated above, as it will be better understood later.

Furthermore, feeding the multiplexers with the random or pseudo random signal does not need to occur at each round of an encryption process.

Of course, a similar architecture with a similar working can be adopted for the corresponding hardware decryption apparatus.

### a.2. Tri-state buffers

One drawback with the foregoing architecture may be found in the fact that a new seed for LFSR 3 needs to be provided at each system reset, meaning that two different executions for this architecture will have different seeds.

The second embodiment which will now be described solves this potential drawback. This embodiment is based on the use of tri-state buffers at the output of some or each hardware module 11 to 14 in order to disconnect the modules from the circuit when they are not computing real data. Hence this solution also provides a power scrambling system that turns DPA attacks very unlikely to be performed:

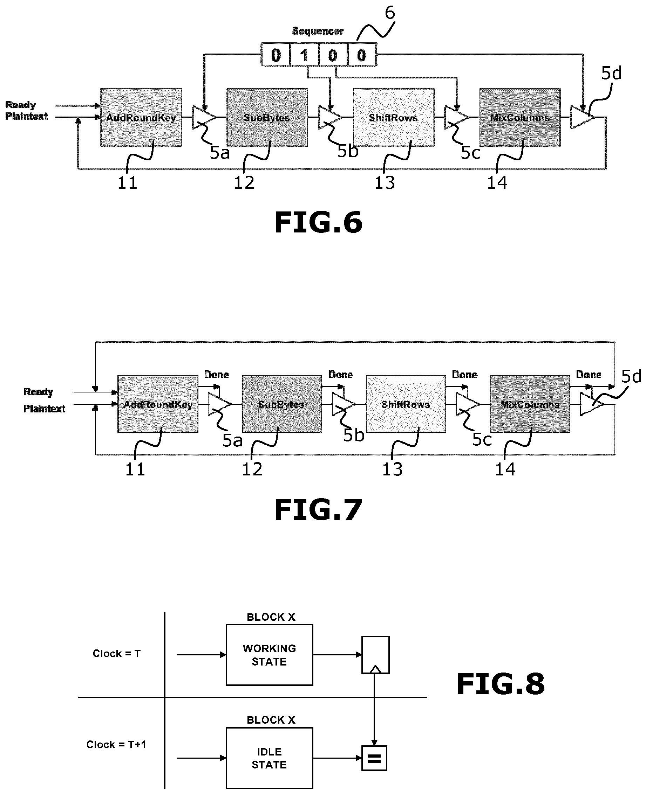

As shown in figure 6, control means for having modules 11 to 14 generating a scrambling power comprise four tri-state buffers 5a to 5d connected respectively between first and second hardware modules, between second and third hardware modules, third and fourth hardware modules, and fourth and first hardware modules. Each of the tri-state buffers 5a to 5d is adapted to be held in a high-impedance state for controlling said second, or respectively third, fourth or first hardware module to generate a scrambling power signal.

There are many ways of controlling which one of the hardware modules 11 to 14 will compute data at a determined clock cycle corresponding to its encryption period, while the three others, in idle mode, will generate a scrambling power signal:

In the exemplary embodiment of figure 6, tri-state buffers 5a to 5d have a data input receiving first, respectively second, third or fourth, output signal, and a control input connected to sequencing means by four registers that will represent which module is working at a time. So, for example, the sequencing means will start with the values 0000 and a Ready signal is set to 1. This means that first AddRoundKey module 11 is starting the computation by reading the input plaintext, while all the other modules 12 to 14 are generating noise in the system (the 0 value will make tri-state buffers 5b to 5d float from 0 to 1 and therefore they will feed the combinational path of all the blocks with random values). The Ready signal controls whether AddRoundKey module 11 receives the input plaintext or the feedback signal from MixColumns module 14. Therefore, even though tri-state 5d is generating noise, it won't be sensed by AddRoundKey module 11 once this module is actually reading the input plaintext and processing it (because of Ready signal is set to 1). As soon as AddRoundKey module 11 finishes its calculation (during one clock cycle corresponding to its associated encryption period), the value is saved in registers. In the next clock cycle, the sequencing means assumes the value 1000, which means that tri-state buffer 5a starts to transfer saved data from registers to SubBytes module 12. At this moment, AddRoundKey module 11, ShiftRows module 13 and MixColumns module 14 are being fed by random noise from respectively tri-state buffer 5d, 5b and 5c. In the next clock cycle, sequencing means 6 go to 0100, as shown in figure 6, which means that ShiftRows module 13 is now working, while all the others are processing noise data. In the next clock cycle, sequencing means 6 go to 0010, and MixColumns module 14 starts its computation. The next possible value for the sequencer is 0001, in the case that AddRoundKey module 11 is being fed by registers at the output of MixColumns module 14, while all the other modules are computing random data.

Another possibility shown in figure 7 is to transfer the Ready signal throughout the four modules 11 to 14. Each of first, second, third and fourth tri-state buffers has a data input receiving said first, respectively second, third or fourth, output signal, and a control input receiving a done signal from said first, respectively second, third or fourth hardware module at the end of the associated first, respectively second, third or fourth encryption period. At the beginning, Ready signal is set to 1 while done signals are all set to 0. That means that all the other modules except AddRoundKey module 11 are generating noise. As soon as AddRoundKey module 11 finishes its calculation, it sets at its output the done signal to 1, meaning that SubBytes module 12 is now going to receive meaningful data to be processed. Thus, the initial Ready signal is given to the first block, that computes data and gives both data and Ready signal for the next block, that computes data and gives it to the next block, and so on and so forth, until the encryption is done.

As for the first embodiment, it is not compulsory to have a tri-state buffer for each of the modules. In addition, even if several tri-state buffers are actually present on the chip, only some of them can be operated to work as indicated above, as it will be better understood later. Again, a similar architecture with a similar working can be adopted for the corresponding hardware decryption apparatus.

### b. Fault Attack Countermeasures:

### b.1. Transient fault

A standard way to check faults in any system is to recompute twice the same operation, either with duplication redundancy or temporal redundancy. Using the advantage of the proposed iterative encryption or decryption pipelined 4-block structure, each hardware module of the structure can be used to self-checking when it is in idle mode, e. g. it will compute what it has previously computed in the last operation. This principle is illustrated in figure 8: at clock = T corresponding to its normal encryption (decryption) period, the block X is working and its output is saved in a register. At clock = T+1, the block X is in idle mode, therefore it will reprocess the same input again and compare results. Block X delivers a transient error detection signal when a result of the processing during the associated encryption (decryption) period does not match with a result of the reprocessing during the clock cycle immediately succeeding the associated encryption (decryption) period. Hence, if a transient fault happens inside this block during T or T+1, it will be caught, causing the apparatus to stop operating.

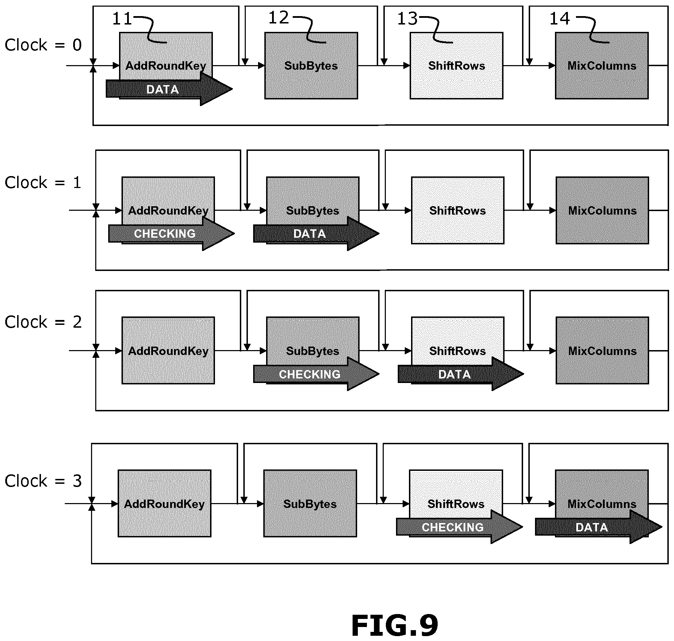

Figure 9 schematically illustrates the states of modules 11 to 14 in an encryption apparatus according to third embodiment, during four successive clock cycles corresponding to first to fourth encryption periods of these modules in a first round, i.e. at the beginning of an encryption process:
- at Clock = 0, which corresponds to the first encryption period associated to first module 11:
   ∘ first module 11 processes data;
   ∘ modules 12 to 14 are in idle mode. They can be used for generating scrambling power as discussed above.
- at Clock = 1, which corresponds to the second encryption period associated to second module 12:
   ∘ first module 11 is in a self-checking process;
   ∘ second module 12 processes data;
   ∘ modules 13 to 14 are in idle mode. They can be used for generating scrambling power as discussed above.
- at Clock = 2, which corresponds to the third encryption period associated to third module 13:
   ∘ second module 12 is in a self-checking process;
   ∘ third module 13 processes data;
   ∘ modules 11 and 14 are in idle mode. They can be used for generating scrambling power as discussed above.
- at Clock = 3, which corresponds to the fourth encryption period associated to fourth module 14, and to the end of the first round:
   ∘ third module 13 is in a self-checking process;
   ∘ fourth module 14 processes data;
   ∘ modules 11 and 12 are in idle mode. They can be used for generating scrambling power as discussed above.

It should be noted that it is not compulsory to have all the modules self checking during all respective idle mode periods. In addition, such self checking can occur only in one or several, but not all the rounds of an encryption process.

The above solution can be used inside both encryption and decryption proposed architectures.

### b.2. Permanent and transient fault

The self-checking process described above is useless for detecting permanent fault attack since, in this case, re computing a data will always lead to the same result as the previous computation.

The basic idea of permanent fault detection scheme according to a fourth embodiment of the invention is to use a pre-computed test value which has been stored within the apparatus at the manufacturing. More precisely, a test processing using the N-round AES algorithm is performed on an errorless device, i.e. computer, using a predetermined input signal or plaintext Pₜₑₛₜ and the secret key K, for delivering the corresponding encrypted output as a pre-computed test value Cₜₑₛₜ.

Then, at any moment of time, defined either by user or by manufacturer, a test processing can be launched during which the predetermined input signal Pₜₑₛₜ and secret key K are given to the encryption apparatus.

According to the principle of the invention, the iterative encryption pipelined 4-block structure will encrypt the predetermined input signal Pₜₑₛₜ into an encrypted test signal in such a manner that each of the first, respectively second, third and fourth hardware module is successively used, during a clock cycle distinct from its associated first, respectively second, third or fourth encryption period.

At the end of the test processing, the encrypted test signal is compared to the pre-computed test value Cₜₑₛₜ. If the apparatus does not contain any permanent fault then these values have to be the same. A transient or permanent error detection signal is delivered when the two values do not match.

Because the iterative encryption, respectively decryption, 4-block structure is pipelined, the proposed detection scheme can run in parallel with normal encryption, respectively decryption, of user data and so it may guarantee coverage of more possible errors than previously proposed schemes while allowing to compute user data without interruption.

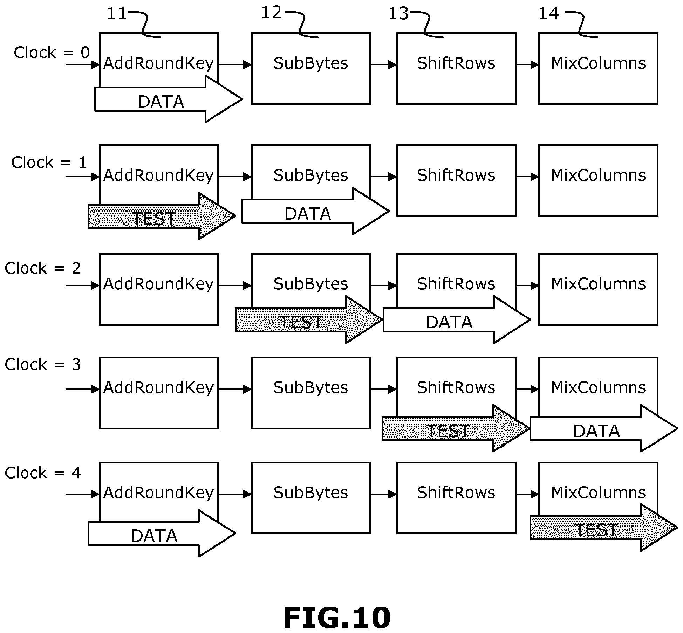

Figure 10 schematically illustrates the states of modules 11 to 14 in an encryption apparatus according to the fourth embodiment, during five successive clock cycles corresponding to first to fourth encryption periods of these modules in a first round, i.e. at the beginning of an encryption process, followed by the first encryption period of the second round:
- at Clock = 0, which corresponds to the first encryption period associated to first module 11:
   ∘ first module 11 processes data;
   ∘ modules 12 to 14 are in idle mode. They can be used for generating scrambling power as discussed above.
- at Clock = 1, which corresponds to the second encryption period associated to second module 12:
   ∘ first module 11 is in the test process;
   ∘ second module 12 processes data;
   ∘ modules 13 to 14 are in idle mode. They can be used for generating scrambling power as discussed above.
- at Clock = 2, which corresponds to the third encryption period associated to third module 13:
   ∘ second module 12 is in the test process;
   ∘ third module 13 processes data;
   ∘ modules 11 and 14 are in idle mode. They can be used for generating scrambling power as discussed above.
- at Clock = 3, which corresponds to the fourth encryption period associated to fourth module 14, and to the end of the first round:
   ∘ third module 13 is in the test process;
   ∘ fourth module 14 processes data;
   ∘ modules 11 and 12 are in idle mode. They can be used for generating scrambling power as discussed above.
- at Clock = 4, which corresponds to the first encryption period of the second round:
   ∘ first module 11 processes data again;
   ∘ fourth module 14 is in the test process;
   ∘ modules 11 and 14 are in idle mode. They can be used for generating scrambling power as discussed above.

The scheme is repeated for the N rounds, until the delivery of the encrypted test signal. This latter signal can be then compared to the pre stored Cₜₑₛₜ and encryption apparatus may deliver an error detection signal if a transient or permanent error has occurred.

Although the different embodiments disclosed above appear to solely achieve one type of countermeasures, all or part of the different solutions can be combined within a single encryption or decryption apparatus, thus giving a high level of configurability. The user can choose in between maximum protection or maximum system throughput. Thanks to the iterative encryption (respectively decryption) pipelined 4-bock structure wherein each hardware module operates in one clock cycle, a hardware encryption (respectively decryption) apparatus according to the invention can encrypt (respectively decrypt) up to four plaintexts (respectively cipher texts) in parallel during N rounds. For example, the user can:
- choose between 1, 2, 3 or 4 plaintexts/cipher texts being encrypted/decrypted at the same time;
- activate power scrambling with LFSR or tri-state buffers;
- use encryption and decryption systems in parallel with the four blocks operating (maximum throughput of the system, no fault detection);
- choose between 1 or 2 inputs to allow fault detection via self-checking while both circuits operate in normal mode;

Of course, the choice of the number of plaintext/ciphertext being processed in parallel impacts on the system security. Transient fault countermeasure based on self-checking mechanism can only be activated with 1 or 2 plaintexts/cipher texts being processed at the same time. In the case of 2 plaintexts/cipher texts they have to be separated by two clock cycles. In any scenario, the more inputs in the system, the less power scrambling protection against DPA is achieved.

Thanks to the invention, protection against side channel and single fault attacks can be activated depending on the user needs. This high flexibility is also interesting at a marketing point of view since only one or few designs needs to be developed, and then configured according to the real needs of the users.

## Claims

1. A hardware encryption apparatus (1) adapted to encrypt an original input signal into an encrypted output signal using a N-round Advanced Encryption Standard, AES, algorithm, said hardware encryption apparatus (1) comprising:
- a hardware KeyExpansion module (10) adapted to generate a round key based on an input key,
- an iterative encryption pipelined 4-block structure comprising:
∘ a first hardware module (11) designated to execute an AddRoundKey function XORing a first input signal with a second input signal and to deliver a result of said AddRoundKey function as a first output signal,
∘ a second hardware module (12) adapted to receive a third input signal, to execute a SubBytes function on said third input signal and to deliver a result of said SubBytes function as a second output signal,
∘ a third hardware module (13) adapted to receive a fourth input signal, to execute a ShiftRows function on said fourth input signal and to deliver a result of said ShiftRows function as a third output signal, and
∘ a fourth hardware module (14) adapted to receive a fifth input signal, to execute a MixColumns function on said fifth signal and to deliver a result of said MixColumns function as a fourth output signal,
- sequencing means (6) for having said iterative encryption pipelined 4-block structure to encrypt said original input signal into said encrypted output signal during an encryption processing using said N-round AES algorithm, wherein for each round said first to fourth hardware modules (11-14) are adapted to encrypt successively their respective input signals, during associated respective first to fourth encryption periods in four successive clock cycles and to deliver their respective encrypted output signal, and for having said hardware KeyExpansion module (10) to generate a new round key at each four-clock cycle, wherein:
∘ for each round, said third input signal is the first output signal, said fourth input signal is the second output signal and fifth input signal is the third output signal,
∘ for a first round, said first input signal is said original input signal and said second input signal is said input key,
∘ for each subsequent round until the last round, said first input signal is the fourth output signal of the preceding round and said second input signal is a round key,
∘ for the last round, said third output signal is transmitted by said fourth hardware module (14) without transformation as fourth output signal, and
∘ An additional passage during one additional clock cycle through said first hardware module (11) delivers said encrypted output signal, wherein said first input signal is the fourth output signal of the last round;
said hardware encryption apparatus (1) being **characterized in that** it also comprises control means (3, 4a-4e, 5a-5d, 6) adapted to control, in at least one round, at least one of the hardware modules in the set of first, second, third and fourth hardware modules, during at least one clock cycle distinct from its associated first, respectively second, third or fourth encryption period, to generate a scrambling power in order to prevent a power analysis attack against said iterative encryption pipelined 4-block structure, while controlling at least one another hardware module in said set to output a particular signal for use in detection, by said encryption pipelined 4-block structure, of a fault attack against said iterative encryption pipelined 4-block structure, wherein said control means comprise at least a tri-state buffer (5a-5d) connected between first and second hardware modules, or respectively between second and third hardware modules, or third and fourth hardware modules, or fourth and first hardware modules, said tri-state buffer (5a-5d) being adapted to be held in a high-impedance state for controlling said at least one of the hardware modules in the set to generate said scrambling power.

2. A hardware encryption apparatus (4) according to claim 1, wherein said tri-state buffer (5a-5d) has a data input receiving said first, respectively second, third or fourth, output signal, and a control input connected to said sequencing means (6).

3. A hardware encryption apparatus (4) according to claim 1, wherein said tri-state buffer (5a-5d) has a data input receiving said first, respectively second, third or fourth, output signal, and a control input receiving a done signal from said first, respectively second, third or fourth hardware module at the end of said associated first, respectively second, third or fourth encryption period.

4. A hardware encryption apparatus (4) according to anyone of claims 1 to 3, wherein said control means are adapted to have said at least one another hardware module in said set to reprocess, during said one clock cycle, the same input signal having been processed by said at least one another hardware module during its associated encryption period immediately preceding said one clock cycle, and to deliver a transient error detection signal constituting said particular signal when a result of the processing during the associated encryption period does not match with a result of the re processing during said one clock cycle.

5. A hardware encryption apparatus (4) according to anyone of claims 1 to 3, wherein said control means comprise said sequencing means (6) further adapted for having said iterative encryption pipelined 4-block structure (1) to encrypt a predetermined input signal into an encrypted test signal during a test processing using said N-round AES algorithm, wherein each of the first, respectively second, third and fourth hardware module is successively used, during a clock cycle distinct from its associated first, respectively second, third or fourth encryption period, for delivering said particular signal as first, respectively second, third, or fourth output signal, and wherein, at the end of said test processing, a transient or permanent error detection signal is delivered when said encrypted test signal does not match with a stored predetermined value.

6. A hardware decryption apparatus (2) adapted to cooperate with an hardware encryption apparatus of claim 1 to decrypt said encrypted output signal into said original input signal using a N-round Advanced decryption Standard, AES, algorithm, said hardware decryption apparatus (2) comprising:
- a hardware KeyExpansion module (20) adapted to generate a round key based on an input key,
- an iterative decryption pipelined 4-block structure comprising:
∘ a first hardware module (24) designated to execute an AddRoundKey function XORing a first input signal with a second input signal and to deliver a result of said AddRoundKey function as a first output signal,
∘ a second hardware module (25) adapted to receive a third input signal, to execute an Inverse MixColumns function on said third input signal and to deliver a result of said Inverse MixColumns function as a second output signal,
∘ a third hardware module (22) adapted to receive a fourth input signal, to execute an Inverse ShiftRows function on said fourth input signal and to deliver a result of said Inverse ShiftRows function as a third output signal, and
∘ a fourth hardware module (23) adapted to receive a fifth input signal, to execute an Inverse SubBytes function on said fifth signal and to deliver a result of said Inverse SubBytes function as a fourth output signal,
- sequencing means for having said iterative decryption pipelined 4-block structure to decrypt said decrypted output signal into said original input signal during a decryption processing using said N-round AES algorithm, wherein for each round said first to fourth hardware modules (22-25) are adapted to decrypt successively their respective input signal, during associated respective first to fourth decryption periods in four successive clock cycles and to deliver their respective decrypted output signal, and for having said hardware KeyExpansion module (20) to generate a new round key at each four-clock cycle, wherein:
∘ for each round, said third input signal is the first output signal, said fourth input signal is the second output signal except for the first round, and fifth input signal is the third output signal,
∘ for the first round, said first input signal is said encrypted output signal, said second input signal is a first round key and fourth input signal is the first output signal transmitted by the second hardware module (25) without transformation,
∘ for each subsequent round including the last round, said first input signal is the fourth output signal of the preceding round and said second input signal is a round key, and
∘ an additional passage during one additional clock cycle through said first hardware module (24) delivers said original input signal, wherein said first input signal is the fourth output signal of the last round;
said hardware decryption apparatus (1) being **characterized in that** it also comprises control means adapted to control, in at least one round, at least one of the hardware modules in the set of first, second, third and fourth hardware modules, during at least one clock cycle distinct from its associated first, respectively second, third or fourth decryption period, to generate a scrambling power in order to prevent a power analysis attack against said iterative decryption pipelined 4-block structure, while controlling at least one another hardware module in said set to output a particular signal for use in detection, by said decryption pipelined 4-block structure, of a fault attack against said iterative decryption pipelined 4-block structure, wherein said control means comprise at least a tri-state buffer (5a-5d) connected between first and second hardware modules, or respectively between second and third hardware modules, or third and fourth hardware modules, or fourth and first hardware modules, said tri-state buffer (5a-5d) being adapted to be held in a high-impedance state for controlling said at least one of the hardware modules in the set to generate said scrambling power.

7. A hardware decryption apparatus (2) according to claim 6, wherein said decryption apparatus is on the same chip as said hardware encryption apparatus (1).

8. A method for controlling a hardware encryption apparatus (1) adapted to encrypt an original input signal into an encrypted output signal using a N-round Advanced Encryption Standard, AES, algorithm, said hardware encryption apparatus (1) comprising:
- a hardware KeyExpansion module (10) adapted to generate a round key based on an input key,
- an iterative encryption pipelined 4-block structure comprising:
∘ a first hardware module (11) designated to execute an AddRoundKey function XORing a first input signal with a second input signal and to deliver a result of said AddRoundKey function as a first output signal,
∘ a second hardware module (12) adapted to receive a third input signal, to execute a SubBytes function on said third input signal and to deliver a result of said SubBytes function as a second output signal,
∘ a third hardware module (13) adapted to receive a fourth input signal, to execute a ShiftRows function on said fourth input signal and to deliver a result of said ShiftRows function as a third output signal, and
∘ a fourth hardware module (14) adapted to receive a fifth input signal, to execute a MixColumns function on said fifth signal and to deliver a result of said MixColumns function as a fourth output signal,
wherein said method performs the steps of:
- sequencing said iterative encryption pipelined 4-block structure to encrypt said original input signal into said encrypted output signal during an encryption processing using said N-round AES algorithm, wherein for each round said first to fourth hardware modules (11-14) encrypt successively their respective input signal, during associated respective first to fourth encryption periods in four successive clock cycles and deliver their respective encrypted output signal, and said hardware KeyExpansion module (10) to generate a new round key at each four-clock cycle, wherein:
∘ for each round, said third input signal is the first output signal, said fourth input signal is the second output signal and fifth input signal is the third output signal,
∘ for a first round, said first input signal is said original input signal and said second input signal is said input key,
∘ for each subsequent round until the last round, said first input signal is the fourth output signal of the preceding round and said second input signal is a round key,
∘ for said last round, said third output signal is transmitted by said fourth hardware module (14) without transformation as fourth output signal,
∘ an additional passage during one additional clock cycle through said first hardware module (11) delivers said encrypted output signal, wherein said first input signal is the fourth output signal of the last round;
said method being **characterized in that** it also performs controlling, in at least one round, at least one of the hardware modules in the set of first, second, third and fourth hardware modules, during at least one clock cycle distinct from its associated first, respectively second, third or fourth encryption periods, to generate a scrambling power in order to prevent a power analysis attack against said iterative encryption pipelined 4-block structure, while controlling at least one another hardware module in said set, to output a particular signal for use in detection, by said encryption pipelined 4-block structure, of a fault attack against said iterative encryption pipelined 4-block structure, through the control of at least a tri-state buffer (5a-5d) connected between first and second hardware modules, or respectively between second and third hardware modules, or third and fourth hardware modules, or fourth and first hardware modules, said tri-state buffer (5a-5d) being adapted to be held in a high-impedance state for controlling said at least one of the hardware modules in the set to generate said scrambling power.

9. A method for controlling a hardware decryption apparatus (2) adapted to decrypt an encrypted input signal into an original signal using a N-round Advanced decryption Standard, AES, algorithm, said hardware decryption apparatus (2) comprising:
- a hardware KeyExpansion module (20) adapted to generate a round key based on an input key,
- an iterative decryption pipelined 4-block structure comprising:
∘ a first hardware module (24) designated to execute an AddRoundKey function XORing a first input signal with a second input signal and to deliver a result of said AddRoundKey function as a first output signal,
∘ a second hardware module (25) adapted to receive a third input signal, to execute an Inverse MixColumns function on said third input signal and to deliver a result of said Inverse MixColumns function as a second output signal,
∘ a third hardware module (22) adapted to receive a fourth input signal, to execute an Inverse ShiftRows function on said fourth input signal and to deliver a result of said Inverse ShiftRows function as a third output signal, and
∘ a fourth hardware module (23) adapted to receive a fifth input signal, to execute an Inverse SubBytes function on said fifth signal and to deliver a result of said Inverse SubBytes function as a fourth output signal,
wherein said method performs the steps of:
- sequencing said iterative decryption pipelined 4-block structure to decrypt said encrypted input signal into said original signal during a decryption processing using said N-round AES algorithm, wherein for each round said first to fourth hardware modules (22-25) decrypt successively their respective input signal, during associated respective first to fourth decryption periods in four successive clock cycles and deliver their respective decrypted output signal, and said hardware KeyExpansion module (20) to generate a new round key at each four-clock cycle, wherein:
∘ for each round, said third input signal is the first output signal, said fourth input signal is the second output signal except for the first round, and fifth input signal is the third output signal
∘ for the first round, said first input signal is said encrypted output signal, said second input signal is a first round key and fourth input signal is said first output signal transmitted by second hardware module (25) without transformation,
∘ for each subsequent round including the last round, said first input signal is the fourth output signal of the preceding round and said second input signal is a round key and
∘ An additional passage during one additional clock cycle through said first hardware module (21) delivers said original signal, wherein said first input signal is the fourth output signal of the last round;
said method being **characterized in that** it also performs controlling, in at least one round, at least one hardware module in the set of first, second, third and fourth hardware modules, during at least one clock cycle distinct from its associated first, respectively second, third or fourth decryption period, to generate a scrambling power in order to prevent a power analysis attack against said iterative decryption pipelined 4-block structure, while controlling at least one another hardware module in said set to output a particular signal for use in detection, by said decryption pipelined 4-block structure, of a fault attack against said iterative decryption pipelined 4-block structure, through the control of at least a tri-state buffer (5a-5d) connected between first and second hardware modules, or respectively between second and third hardware modules, or third and fourth hardware modules, or fourth and first hardware modules, said tri-state buffer (5a-5d) being adapted to be held in a high-impedance state for controlling said at least one of the hardware modules in the set to generate said scrambling power.

## Patentansprüche

1. Hardwareverschlüsselungsvorrichtung (1), die so ausgelegt ist, dass sie ein ursprüngliches Eingangssignal unter Verwendung eines AES (Advanced Encryption Standard)-Algorithmus mit N Runden in ein verschlüsseltes Ausgangssignal verschlüsselt, wobei die Hardwareverschlüsselungsvorrichtung (1) umfasst:
- ein Hardware-KeyExpansion-Modul (10), das zum Erzeugen eines Rundenschlüssels basierend auf einem Eingabeschlüssel ausgelegt ist,
- eine 4-Block-Pipelinestruktur für iterative Verschlüsselung, umfassend:
∘ ein erstes Hardwaremodul (11), das so ausgelegt ist, dass es anhand einer AddRoundKey-Funktion exklusives ODERieren eines ersten Eingangssignals mit einem zweiten Eingangssignal ausführt und das Ergebnis der AddRoundKey-Funktion als ein erstes Ausgangssignal liefert,
∘ ein zweites Hardwaremodul (12), das so ausgelegt ist, dass es ein drittes Eingangssignal empfängt, eine SubBytes-Funktion am dritten Eingangssignal ausführt und ein Ergebnis der SubBytes-Funktion als ein zweites Ausgangssignal liefert,
∘ ein drittes Hardwaremodul (13), das so ausgelegt ist, dass es ein viertes Eingangssignal empfängt, eine ShiftRows-Funktion am vierten Eingangssignal ausführt und ein Ergebnis der ShiftRows-Funktion als ein drittes Ausgangssignal liefert,
∘ ein viertes Hardwaremodul (14), das so ausgelegt ist, dass es ein fünftes Eingangssignal empfängt, eine MixColumns-Funktion am fünften Signal ausführt und ein Ergebnis der MixColumns-Funktion als ein viertes Ausgangssignal liefert,
- Sequenzierungsmittel (6) zum Veranlassen der 4-Block-Pipelinestruktur für iterative Verschlüsselung, das ursprüngliche Eingangssignal während einer Verschlüsselungsverarbeitung unter Verwendung des AES-Algorithmus mit N Runden in das verschlüsselte Ausgangssignal zu verschlüsseln, wobei die ersten bis vierten Hardwaremodule (11-14) so ausgelegt sind, dass sie für jede Runde ihre jeweiligen Eingangssignale während assoziierter jeweiliger erster bis vierter Verschlüsselungsperioden in vier aufeinanderfolgenden Taktzyklen sukzessive verschlüsseln und ihr jeweiliges verschlüsseltes Ausgangssignal liefern, und zum Veranlassen des KeyExpansion-Hardwaremoduls (10), einen neuen Rundenschlüssel bei jedem Vier-Takt-Zyklus zu erzeugen, wobei:
∘ für jede Runde das dritte Eingangssignal das erste Ausgangssignal ist, das vierte Eingangssignal das zweite Ausgangssignal ist, und das fünfte Eingangssignal das dritte Ausgangssignal ist,
∘ für eine erste Runde das erste Eingangssignal das ursprüngliche Eingangssignal ist, und das zweite Eingangssignal der Eingabeschlüssel ist,
∘ für jede nachfolgende Runde bis zur letzten Runde das erste Eingangssignal das vierte Ausgangssignal der vorhergehenden Runde ist, und das zweite Eingangssignal ein Rundenschlüssel ist,
∘ für die letzte Runde das dritte Ausgangssignal durch das vierte Hardwaremodul (14) ohne Transformation als viertes Ausgangssignal gesendet wird, und
∘ und ein zusätzlicher Durchgang während eines zusätzlichen Taktzyklus durch das erste Hardwaremodul (11) das verschlüsselte Ausgangssignal liefert, wobei das erste Eingangssignal das vierte Ausgangssignal der letzten Runde ist;
die Hardwareverschlüsselungsvorrichtung (1) **dadurch gekennzeichnet ist, dass** sie außerdem Steuermittel (3, 4a-4e, 5a-5d, 6) umfasst, die so ausgelegt sind, dass sie in mindestens einer Runde mindestens eines der Hardwaremodule im Satz von ersten, zweiten, dritten und vierten Hardwaremodulen während mindestens eines Taktzyklus, der von seiner assoziierten ersten, zweiten, dritten bzw. vierten Verschlüsselungsperiode verschieden ist, so steuern, dass es eine Verwürfelungsleistung erzeugt, um eine Leistungsanalyseattacke gegen die 4-Block-Pipelinestruktur für iterative Verschlüsselung zu verhindern, während sie mindestens ein anderes Hardwaremodul im Satz so steuern, dass es ein bestimmtes Signal zur Verwendung bei Detektion durch die 4-Block-Pipelinestruktur für iterative Verschlüsselung einer Fehlerattacke gegen die 4-Block-Pipelinestruktur für iterative Verschlüsselung ausgibt, wobei die Steuermittel einen Tristate-Puffer (5a-5d) umfassen, der zwischen erste und zweite Hardwaremodule bzw. zweite und dritte Hardwaremodule bzw. dritte und vierte Hardwaremodule bzw. vierte und erste Hardwaremodule geschaltet ist, wobei der Tristate-Puffer (5a-5d) so ausgelegt ist, dass er zum Steuern des mindestens einen der Hardwaremodule im Satz zum Erzeugen der Verwürfelungsleistung in einem hochohmigen Zustand gehalten wird.

2. Hardwareverschlüsselungsvorrichtung (4) nach Anspruch 1, wobei der Tristate-Puffer (5a-5d) einen Dateneingang, der das erste, zweite, dritte bzw. vierte Ausgangssignal empfängt, und einen Steuereingang aufweist, der mit dem Sequenzierungsmittel (6) verbunden ist.

3. Hardwareverschlüsselungsvorrichtung (4) nach Anspruch 1, wobei der Tristate-Puffer (5a-5d) einen Dateneingang, der das erste, zweite, dritte bzw. vierte Ausgangssignal empfängt, und einen Steuereingang aufweist, der ein Erledigt-Signal vom ersten, zweiten, dritten bzw. vierten Hardwaremodul am Ende der assoziierten ersten, zweiten, dritten bzw. vierten Verschlüsselungsperiode empfängt.

4. Hardwareverschlüsselungsvorrichtung (4) nach einem der Ansprüche 1 bis 3, wobei die Steuermittel so ausgelegt sind, dass sie das mindestens eine andere Hardwaremodul im Satz zu veranlassen, während des einen Taktzyklus das gleiche Eingangssignal, das von dem mindestens einen anderen Hardwaremodul während seiner dem einen Taktzyklus unmittelbar vorangehenden assoziierten Verschlüsselungsperiode verarbeitet wurde, erneut zu verarbeiten und ein transientes Fehlerdetektionssignal, welches das bestimmte Signal darstellt, zu liefern, wenn ein Ergebnis der Verarbeitung während der assoziierten Verschlüsselungsperiode nicht mit einem Ergebnis der Neuverarbeitung während des einen Taktzyklus übereinstimmt.

5. Hardwareverschlüsselungsvorrichtung (4) nach einem der Ansprüche 1 bis 3, wobei die Steuermittel die Sequenzierungsmittel (6) umfassen, die ferner so ausgelegt sind, dass sie die 4-Block-Pipelinestruktur für iterative Verschlüsselung (1) veranlassen, ein vorbestimmtes Eingangssignal während einer Testverarbeitung unter Verwendung des AES-Algorithmus mit N Runden in ein verschlüsseltes Testsignal zu verschlüsseln, wobei jedes des ersten, zweiten, dritten bzw. vierten Hardwaremoduls während eines Taktzyklus, der von seiner assoziierten ersten, zweiten, dritten bzw. vierten Verschlüsselungsperiode verschieden ist, sukzessive zum Liefern des bestimmten Signals als erstes, zweites, drittes bzw. viertes Ausgangssignal verwendet wird, und wobei am Ende der Testverarbeitung ein transientes oder permanentes Fehlerdetektionssignal geliefert wird, wenn das verschlüsselte Testsignal nicht mit einem gespeicherten vorbestimmten Wert übereinstimmt.

6. Hardwareentschlüsselungsvorrichtung (2), die so ausgelegt ist, dass sie mit einer Hardwareverschlüsselungsvorrichtung nach Anspruch 1 zusammenwirkt, um das verschlüsselte Ausgangssignal unter Verwendung eines AES (Advanced Encryption Standard)-Algorithmus mit N Runden in das ursprüngliche Eingangssignal zu entschlüsseln, wobei die Hardwareentschlüsselungsvorrichtung (2) umfasst:
- ein Hardware-KeyExpansion-Modul (20), das zum Erzeugen eines Rundenschlüssels basierend auf einem Eingabeschlüssel ausgelegt ist,
- eine 4-Block-Pipelinestruktur für iterative Entschlüsselung, umfassend:
∘ ein erstes Hardwaremodul (24), das so ausgelegt ist, dass es anhand einer AddRoundKey-Funktion exklusives ODERieren eines ersten Eingangssignals mit einem zweiten Eingangssignal ausführt und das Ergebnis der AddRoundKey-Funktion als ein erstes Ausgangssignal liefert,
∘ ein zweites Hardwaremodul (25), das so ausgelegt ist, dass es ein drittes Eingangssignal empfängt, eine inverse MixColumns-Funktion am dritten Eingangssignal ausführt und ein Ergebnis der inversen MixColumns-Funktion als ein zweites Ausgangssignal liefert,
∘ ein drittes Hardwaremodul (22), das so ausgelegt ist, dass es ein viertes Eingangssignal empfängt, eine inverse ShiftRows-Funktion am vierten Eingangssignal ausführt und ein Ergebnis der inversen ShiftRows-Funktion als ein drittes Ausgangssignal liefert, und
∘ ein viertes Hardwaremodul (23), das so ausgelegt ist, dass es ein fünftes Eingangssignal empfängt, eine inverse SubBytes-Funktion am fünften Signal ausführt und ein Ergebnis der inversen SubBytes-Funktion als ein viertes Ausgangssignal liefert,
- Sequenzierungsmittel zum Veranlassen der 4-Block-Pipelinestruktur für iterative Entschlüsselung, das entschlüsselte Ausgangssignal während einer Entschlüsselungsverarbeitung unter Verwendung des AES-Algorithmus mit N Runden in das ursprüngliche Eingangssignal zu entschlüsseln, wobei die ersten bis vierten Hardwaremodule (22-25) so ausgelegt sind, dass sie für jede Runde ihr jeweiliges Eingangssignal während assoziierter jeweiliger erster bis vierter Entschlüsselungsperioden in vier aufeinanderfolgenden Taktzyklen sukzessive entschlüsseln und ihr jeweiliges entschlüsseltes Ausgangssignal liefern, und zum Veranlassen des KeyExpansion-Hardwaremoduls (20), einen neuen Rundenschlüssel bei jedem Vier-Takt-Zyklus zu erzeugen, wobei:
∘ für jede Runde das dritte Eingangssignal das erste Ausgangssignal ist, das vierte Eingangssignal mit Ausnahme der ersten Runde das zweite Ausgangssignal ist, und das fünfte Eingangssignal das dritte Ausgangssignal ist,
∘ für die erste Runde das erste Eingangssignal das verschlüsselte Ausgangssignal ist, das zweite Eingangssignal ein vierter Rundenschlüssel ist, und das vierte Eingangssignal das erste Ausgangssignal ist, das vom zweiten Hardwaremodul (25) ohne Transformation gesendet wird,
∘ für jede nachfolgende Runde, einschließlich der letzten Runde, das erste Eingangssignal das vierte Ausgangssignal der vorhergehenden Runde ist, und das zweite Eingangssignal ein Rundenschlüssel ist, und
∘ und ein zusätzlicher Durchgang während eines zusätzlichen Taktzyklus durch das erste Hardwaremodul (24) das ursprüngliche Eingangssignal liefert, wobei das erste Eingangssignal das vierte Ausgangssignal der letzten Runde ist;
die Hardwareentschlüsselungsvorrichtung (1) **dadurch gekennzeichnet ist, dass** sie außerdem Steuermittel umfasst, die so ausgelegt sind, dass sie in mindestens einer Runde mindestens eines der Hardwaremodule im Satz von ersten, zweiten, dritten und vierten Hardwaremodulen während mindestens eines Taktzyklus, der von seiner assoziierten ersten, zweiten, dritten bzw. vierten Entschlüsselungsperiode verschieden ist, so steuern, dass es eine Verwürfelungsleistung erzeugt, um eine Leistungsanalyseattacke gegen die 4-Block-Pipelinestruktur für iterative Entschlüsselung zu verhindern, während sie mindestens ein anderes Hardwaremodul im Satz so steuern, dass es ein bestimmtes Signal zur Verwendung bei Detektion durch die 4-Block-Pipelinestruktur für iterative Entschlüsselung einer Fehlerattacke gegen die 4-Block-Pipelinestruktur für iterative Entschlüsselung ausgibt, wobei die Steuermittel einen Tristate-Puffer (5a-5d) umfassen, der zwischen erste und zweite Hardwaremodule bzw. zweite und dritte Hardwaremodule bzw. dritte und vierte Hardwaremodule bzw. vierte und erste Hardwaremodule geschaltet ist, wobei der Tristate-Puffer (5a-5d) so ausgelegt ist, dass er zum Steuern des mindestens einen der Hardwaremodule im Satz zum Erzeugen der Verwürfelungsleistung in einem hochohmigen Zustand gehalten wird.

7. Hardwareentschlüsselungsvorrichtung (2) nach Anspruch 6, wobei die Entschlüsselungsvorrichtung auf dem gleichen Chip wie die Hardwareverschlüsselungsvorrichtung (1) ist.

8. Verfahren zur Steuerung einer Hardwareverschlüsselungsvorrichtung (1), die so ausgelegt ist, dass sie ein ursprüngliches Eingangssignal unter Verwendung eines AES (Advanced Encryption Standard)-Algorithmus mit N Runden in ein verschlüsseltes Ausgangssignal verschlüsselt, wobei die Hardwareverschlüsselungsvorrichtung (1) umfasst:
- ein Hardware-KeyExpansion-Modul (10), das zum Erzeugen eines Rundenschlüssels basierend auf einem Eingabeschlüssel ausgelegt ist,
- eine 4-Block-Pipelinestruktur für iterative Verschlüsselung, umfassend:
∘ ein erstes Hardwaremodul (11), das so ausgelegt ist, dass es anhand einer AddRoundKey-Funktion exklusives ODERieren eines ersten Eingangssignals mit einem zweiten Eingangssignal ausführt und das Ergebnis der AddRoundKey-Funktion als ein erstes Ausgangssignal liefert,
∘ ein zweites Hardwaremodul (12), das so ausgelegt ist, dass es ein drittes Eingangssignal empfängt, eine SubBytes-Funktion am dritten Eingangssignal ausführt und ein Ergebnis der SubBytes-Funktion als ein zweites Ausgangssignal liefert,
∘ ein drittes Hardwaremodul (13), das so ausgelegt ist, dass es ein viertes Eingangssignal empfängt, eine ShiftRows-Funktion am vierten Eingangssignal ausführt und ein Ergebnis der ShiftRows-Funktion als ein drittes Ausgangssignal liefert,
∘ ein viertes Hardwaremodul (14), das so ausgelegt ist, dass es ein fünftes Eingangssignal empfängt, eine MixColumns-Funktion am fünften Signal ausführt und ein Ergebnis der Mix Columns-Funktion als ein viertes Ausgangssignal liefert,
wobei das Verfahren die folgenden Schritte ausführt:
- Sequenzieren der 4-Block-Pipelinestruktur für iterative Verschlüsselung, um das ursprüngliche Eingangssignal während einer Verschlüsselungsverarbeitung unter Verwendung des AES-Algorithmus mit N Runden in das verschlüsselte Ausgangssignal zu verschlüsseln, wobei die ersten bis vierten Hardwaremodule (11-14) für jede Runde ihr jeweiliges Eingangssignal während assoziierter jeweiliger erster bis vierter Verschlüsselungsperioden in vier aufeinanderfolgenden Taktzyklen sukzessive verschlüsseln und ihr jeweiliges verschlüsseltes Ausgangssignal liefern, und des KeyExpansion-Hardwaremoduls (10), um einen neuen Rundenschlüssel bei jedem Vier-Takt-Zyklus zu erzeugen, wobei:
∘ für jede Runde das dritte Eingangssignal das erste Ausgangssignal ist, das vierte Eingangssignal das zweite Ausgangssignal ist, und das fünfte Eingangssignal das dritte Ausgangssignal ist,
∘ für eine erste Runde das erste Eingangssignal das ursprüngliche Eingangssignal ist, und das zweite Eingangssignal der Eingabeschlüssel ist,
∘ für jede nachfolgende Runde bis zur letzten Runde das erste Eingangssignal das vierte Ausgangssignal der vorhergehenden Runde ist, und das zweite Eingangssignal ein Rundenschlüssel ist,
∘ für die letzte Runde das dritte Ausgangssignal durch das vierte Hardwaremodul (14) ohne Transformation als viertes Ausgangssignal gesendet wird,
∘ und ein zusätzlicher Durchgang während eines zusätzlichen Taktzyklus durch das erste Hardwaremodul (11) das verschlüsselte Ausgangssignal liefert, wobei das erste Eingangssignal das vierte Ausgangssignal der letzten Runde ist;
das Verfahren **dadurch gekennzeichnet ist, dass** es außerdem in mindestens einer Runde ein derartiges Steuern mindestens eines der Hardwaremodule im Satz von ersten, zweiten, dritten und vierten Hardwaremodulen während mindestens eines Taktzyklus, der von seiner assoziierten ersten, zweiten, dritten bzw. vierten Verschlüsselungsperiode verschieden ist, durchführt, dass es eine Verwürfelungsleistung erzeugt, um eine Leistungsanalyseattacke gegen die 4-Block-Pipelinestruktur für iterative Verschlüsselung zu verhindern, während mindestens ein anderes Hardwaremodul im Satz derart gesteuert wird, dass es ein bestimmtes Signal zur Verwendung bei Detektion durch die 4-Block-Pipelinestruktur für iterative Verschlüsselung einer Fehlerattacke gegen die 4-Block-Pipelinestruktur für iterative Verschlüsselung ausgibt, durch die Steuerung mindestens eines Tristate-Puffers (5a-5d), der zwischen erste und zweite Hardwaremodule bzw. zweite und dritte Hardwaremodule bzw. dritte und vierte Hardwaremodule bzw. vierte und erste Hardwaremodule geschaltet ist, wobei der Tristate-Puffer (5a-5d) so ausgelegt ist, dass er zum Steuern des mindestens einen der Hardwaremodule im Satz zum Erzeugen der Verwürfelungsleistung in einem hochohmigen Zustand gehalten wird.

9. Verfahren zur Steuerung einer Hardwareentschlüsselungsvorrichtung (2), die so ausgelegt ist, dass sie ein verschlüsseltes Eingangssignal unter Verwendung eines AES (Advanced Encryption Standard)-Algorithmus mit N Runden in ein ursprüngliches Signal entschlüsselt, wobei die Hardwareentschlüsselungsvorrichtung (2) umfasst:
- ein Hardware-KeyExpansion-Modul (20), das zum Erzeugen eines Rundenschlüssels basierend auf einem Eingabeschlüssel ausgelegt ist,
- eine 4-Block-Pipelinestruktur für iterative Entschlüsselung, umfassend:
∘ ein erstes Hardwaremodul (24), das so ausgelegt ist, dass es anhand einer AddRoundKey-Funktion exklusives ODERieren eines ersten Eingangssignals mit einem zweiten Eingangssignal ausführt und das Ergebnis der AddRoundKey-Funktion als ein erstes Ausgangssignal liefert,
∘ ein zweites Hardwaremodul (25), das so ausgelegt ist, dass es ein drittes Eingangssignal empfängt, eine inverse MixColumns-Funktion am dritten Eingangssignal ausführt und ein Ergebnis der inversen MixColumns-Funktion als ein zweites Ausgangssignal liefert,
∘ ein drittes Hardwaremodul (22), das so ausgelegt ist, dass es ein viertes Eingangssignal empfängt, eine inverse ShiftRows-Funktion am vierten Eingangssignal ausführt und ein Ergebnis der inversen ShiftRows-Funktion als ein drittes Ausgangssignal liefert,
∘ ein viertes Hardwaremodul (23), das so ausgelegt ist, dass es ein fünftes Eingangssignal empfängt, eine inverse SubBytes-Funktion am fünften Signal ausführt und ein Ergebnis der inversen SubBytes-Funktion als ein viertes Ausgangssignal liefert,
wobei das Verfahren die folgenden Schritte ausführt:
- Sequenzieren der 4-Block-Pipelinestruktur für iterative Entschlüsselung, um das verschlüsselte Eingangssignal während einer Entschlüsselungsverarbeitung unter Verwendung des AES-Algorithmus mit N Runden in das ursprüngliche Signal zu entschlüsseln, wobei die ersten bis vierten Hardwaremodule (22-25) für jede Runde ihr jeweiliges Eingangssignal während assoziierter jeweiliger erster bis vierter Entschlüsselungsperioden in vier aufeinanderfolgenden Taktzyklen sukzessive entschlüsseln und ihr jeweiliges entschlüsseltes Ausgangssignal liefern, und des KeyExpansion-Hardwaremoduls (20), um einen neuen Rundenschlüssel bei jedem Vier-Takt-Zyklus zu erzeugen, wobei:
∘ für jede Runde das dritte Eingangssignal das erste Ausgangssignale ist, das vierte Eingangssignal mit Ausnahme der ersten Runde das zweite Ausgangssignal ist, und das fünfte Eingangssignal das dritte Ausgangssignal ist,
∘ für die erste Runde das erste Eingangssignal das verschlüsselte Ausgangssignal ist, das zweite Eingangssignal ein vierter Rundenschlüssel ist, und das vierte Eingangssignal das erste Ausgangssignal ist, das vom zweiten Hardwaremodul (25) ohne Transformation gesendet wird,
∘ für jede nachfolgende Runde, einschließlich der letzten Runde, das erste Eingangssignal das vierte Ausgangssignal der vorhergehenden Runde ist, und das zweite Eingangssignal ein Rundenschlüssel ist, und
∘ und ein zusätzlicher Durchgang während eines zusätzlichen Taktzyklus durch das erste Hardwaremodul (21) das ursprüngliche Signal liefert, wobei das erste Eingangssignal das vierte Ausgangssignal der letzten Runde ist;
das Verfahren **dadurch gekennzeichnet ist, dass** es außerdem in mindestens einer Runde ein derartiges Steuern mindestens ein Hardwaremodul im Satz von ersten, zweiten, dritten und vierten Hardwaremodulen während mindestens eines Taktzyklus, der von seiner assoziierten ersten, zweiten, dritten bzw. vierten Entschlüsselungsperiode verschieden ist, durchführt, dass es eine Verwürfelungsleistung erzeugt, um eine Leistungsanalyseattacke gegen die 4-Block-Pipelinestruktur für iterative Entschlüsselung zu verhindern, während mindestens ein anderes Hardwaremodul im Satz derart gesteuert wird, dass es ein bestimmtes Signal zur Verwendung bei Detektion durch die 4-Block-Pipelinestruktur für iterative Entschlüsselung einer Fehlerattacke gegen die 4-Block-Pipelinestruktur für iterative Entschlüsselung ausgibt, durch die Steuerung mindestens eines Tristate-Puffers (5a-5d), der zwischen erste und zweite Hardwaremodule bzw. zweite und dritte Hardwaremodule bzw. dritte und vierte Hardwaremodule bzw. vierte und erste Hardwaremodule geschaltet ist, wobei der Tristate-Puffer (5a-5d) so ausgelegt ist, dass er zum Steuern des mindestens einen der Hardwaremodule im Satz zum Erzeugen der Verwürfelungsleistung in einem hochohmigen Zustand gehalten wird.

## Revendications

1. Appareil de chiffrement matériel (1) apte à chiffrer un signal d'entrée d'origine en un signal de sortie chiffré, en utilisant un algorithme de standard de chiffrement avancé, AES, à N cycles, ledit appareil de chiffrement matériel (1) comprenant :
- un module « KeyExpansion » matériel (10) apte à générer une clé ronde sur la base d'une clé d'entrée ;
- une structure de chiffrement itératif à 4 blocs pipelinée comprenant :
∘ un premier module matériel (11) conçu de manière à exécuter une fonction « AddRoundKey » en mettant en oeuvre une opération booléenne OU exclusif sur un premier signal d'entrée avec un deuxième signal d'entrée, et à délivrer un résultat de ladite fonction « AddRoundKey » sous la forme d'un premier signal de sortie ;
∘ un deuxième module matériel (12) apte à recevoir un troisième signal d'entrée, à exécuter une fonction « SubBytes » sur ledit troisième signal d'entrée et à délivrer un résultat de ladite fonction « SubBytes » sous la forme d'un deuxième signal de sortie ;
∘ un troisième module matériel (13) apte à recevoir un quatrième signal d'entrée, à exécuter une fonction « ShiftRows » sur ledit quatrième signal d'entrée, et à délivrer un résultat de ladite fonction « ShiftRows » sous la forme d'un troisième signal de sortie, et
∘ un quatrième module matériel (14) apte à recevoir un cinquième signal d'entrée, à exécuter une fonction « MixColumns » sur ledit cinquième signal et à délivrer un résultat de ladite fonction « MixColumns » sous la forme d'un quatrième signal de sortie ;
- un moyen de séquencement (6) pour amener ladite structure de chiffrement itératif à 4 blocs pipelinée à chiffrer ledit signal d'entrée d'origine en ledit signal de sortie chiffré au cours d'un traitement de chiffrement, en utilisant ledit algorithme de standard AES à N cycles, dans lequel, pour chaque cycle, lesdits premier à quatrième modules matériels (11-14) sont aptes à chiffrer successivement leurs signaux d'entrée respectifs, au cours des première à quatrième périodes de chiffrement associées respectives dans quatre cycles d'horloge successifs et à délivrer leur signal de sortie chiffré respectif, et pour amener ledit module « KeyExpansion » matériel (10) à générer une nouvelle clé ronde à chaque cycle de quatre horloges, dans lequel :
∘ pour chaque cycle, ledit troisième signal d'entrée correspond au premier signal de sortie, ledit quatrième signal d'entrée correspond au deuxième signal de sortie et le cinquième signal d'entrée correspond au troisième signal de sortie ;
∘ pour un premier cycle, ledit premier signal d'entrée correspond audit signal d'entrée d'origine et ledit deuxième signal d'entrée correspond à ladite clé d'entrée ;
∘ pour chaque cycle subséquent jusqu'au dernier cycle, ledit premier signal d'entrée correspond au quatrième signal de sortie du cycle précédent et ledit deuxième signal d'entrée correspond à une clé ronde ;
∘ pour le dernier cycle, ledit troisième signal de sortie est transmis par ledit quatrième module matériel (14), sans transformation, sous la forme d'un quatrième signal de sortie ; et
∘ un passage supplémentaire au cours d'un cycle d'horloge supplémentaire à travers ledit premier module matériel (11) délivre ledit signal de sortie chiffré, dans lequel ledit premier signal d'entrée correspond au quatrième signal de sortie du dernier cycle ;
ledit appareil de chiffrement matériel (1) étant **caractérisé en ce qu'**il comprend également un moyen de commande (3, 4a-4e, 5a-5d, 6) apte à commander, dans au moins un cycle, à au moins l'un des modules matériels dans l'ensemble de premier, deuxième, troisième et quatrième modules matériels, au cours d'au moins un cycle d'horloge distinct de sa première, deuxième, troisième ou quatrième période de chiffrement respectivement associée, de générer une puissance d'embrouillage en vue d'empêcher une attaque par analyse de puissance contre ladite structure de chiffrement itératif à 4 blocs pipelinée, tout en commandant à au moins un autre module matériel dans ledit ensemble de fournir en sortie un signal spécifique destiné à être utilisé dans le cadre de la détection, par ladite structure de chiffrement à 4 blocs pipelinée, d'une attaque par fautes contre ladite structure de chiffrement itératif à 4 blocs pipelinée, dans lequel ledit moyen de commande comprend au moins une mémoire tampon à trois états (5a-5d) connectée entre les premier et deuxième modules matériels, ou respectivement entre les deuxième et troisième modules matériels, ou troisième et quatrième modules matériels, ou quatrième et premier modules matériels, ladite mémoire tampon à trois états (5a-5d) étant apte à être maintenue dans un état de haute impédance en vue de commander audit au moins l'un des modules matériels dans l'ensemble de générer ladite puissance d'embrouillage.

2. Appareil de chiffrement matériel (4) selon la revendication 1, dans lequel ladite mémoire tampon à trois états (5a-5d) présente une entrée de données recevant ledit premier, deuxième, troisième ou quatrième signal de sortie, respectivement, et une entrée de commande connectée audit moyen de séquencement (6).

3. Appareil de chiffrement matériel (4) selon la revendication 1, dans lequel ladite mémoire tampon à trois états (5a-5d) présente une entrée de données recevant ledit premier, deuxième, troisième ou quatrième signal de sortie, respectivement, et une entrée de commande recevant un signal de réalisation en provenance dudit premier, deuxième, troisième ou quatrième module matériel, respectivement, à la fin de ladite première, deuxième, troisième ou quatrième période de chiffrement associée, respectivement.

4. Appareil de chiffrement matériel (4) selon l'une quelconque des revendications 1 à 3, dans lequel ledit moyen de commande est apte à amener ledit au moins un autre module matériel dans ledit ensemble à retraiter, au cours dudit un cycle d'horloge, le même signal d'entrée que celui qui a été traité par ledit au moins un autre module matériel au cours de sa période de chiffrement associée précédent immédiatement ledit un cycle d'horloge, et à délivrer un signal de détection d'erreur transitoire constituant ledit signal spécifique lorsqu'un résultat du traitement au cours de la période de chiffrement associée ne correspond pas à un résultat du retraitement au cours dudit un cycle d'horloge.

5. Appareil de chiffrement matériel (4) selon l'une quelconque des revendications 1 à 3, dans lequel ledit moyen de commande comprend ledit moyen de séquencement (6) en outre apte à amener ladite structure de chiffrement itératif à 4 blocs pipelinée (1) à chiffrer un signal d'entrée prédéterminé en un signal de test chiffré au cours d'un traitement de test, en utilisant ledit algorithme de standard AES à N cycles, dans lequel chaque module parmi les premier, deuxième, troisième et quatrième modules matériels, respectivement, est successivement utilisé, au cours d'un cycle d'horloge distinct de sa première, deuxième, troisième ou quatrième période de chiffrement respectivement associée, en vue de délivrer ledit signal spécifique en tant que le premier, deuxième, troisième et quatrième module signal de sortie, respectivement, et dans lequel, à la fin dudit traitement de test, un signal de détection d'erreur transitoire ou permanent est délivré lorsque ledit signal de test chiffré ne correspond pas à une valeur prédéterminée stockée.

6. Appareil de déchiffrement matériel (2) apte à coopérer avec un appareil de chiffrement matériel selon la revendication 1 en vue de déchiffrer ledit signal de sortie chiffré en ledit signal d'entrée d'origine, en utilisant un algorithme de standard de déchiffrement avancé, AES, à N cycles, ledit appareil de déchiffrement matériel (2) comprenant :
- un module « KeyExpansion » matériel (20) apte à générer une clé ronde sur la base d'une clé d'entrée ;
- une structure de déchiffrement itératif à 4 blocs pipelinée comprenant :
∘ un premier module matériel (24) conçu de manière à exécuter une fonction « AddRoundKey » en mettant en oeuvre une opération booléenne OU exclusif sur un premier signal d'entrée avec un deuxième signal d'entrée, et à délivrer un résultat de ladite fonction « AddRoundKey » sous la forme d'un premier signal de sortie ;
∘ un deuxième module matériel (25) apte à recevoir un troisième signal d'entrée, à exécuter une fonction « MixColumns » inverse sur ledit troisième signal d'entrée, et à délivrer un résultat de ladite fonction « MixColumns » inverse sous la forme d'un deuxième signal de sortie ;
∘ un troisième module matériel (22) apte à recevoir un quatrième signal d'entrée, à exécuter une fonction « ShiftRows » inverse sur ledit quatrième signal d'entrée et à délivrer un résultat de ladite fonction « ShiftRows » inverse sous la forme d'un troisième signal de sortie ; et
∘ un quatrième module matériel (23) apte à recevoir un cinquième signal d'entrée, à exécuter une fonction « SubBytes » inverse sur ledit cinquième signal et à délivrer un résultat de ladite fonction « SubBytes » inverse sous la forme d'un quatrième signal de sortie ;
- un moyen de séquencement pour amener ladite structure de déchiffrement itératif à 4 blocs pipelinée à déchiffrer ledit signal de sortie déchiffré en ledit signal d'entrée d'origine au cours d'un traitement de déchiffrement, en utilisant ledit algorithme de standard AES à N cycles, dans lequel, pour chaque cycle, lesdits premier à quatrième modules matériels (22-25) sont aptes à déchiffrer successivement leur signal d'entrée respectif, au cours de première à quatrième périodes de déchiffrement associées respectives dans quatre cycles d'horloge successifs et à délivrer leur signal de sortie déchiffré respectif, et pour amener ledit module « KeyExpansion » matériel (20) à générer une nouvelle clé ronde à chaque cycle de quatre horloges, dans lequel :
∘ pour chaque cycle, ledit troisième signal d'entrée correspond au premier signal de sortie, ledit quatrième signal d'entrée correspond au deuxième signal de sortie hormis pour le premier cycle, et le cinquième signal d'entrée correspond au troisième signal de sortie ;
∘ pour le premier cycle, ledit premier signal d'entrée correspond audit signal de sortie chiffré, ledit deuxième signal d'entrée correspond à une première clé ronde et le quatrième signal d'entrée correspond au premier signal de sortie transmis par le deuxième module matériel (25), sans transformation ;
∘ pour chaque cycle subséquent y compris le dernier cycle, ledit premier signal d'entrée correspond au quatrième signal de sortie du cycle précédent et ledit deuxième signal d'entrée correspond à une clé ronde ; et
∘ un passage supplémentaire au cours d'un cycle d'horloge supplémentaire à travers ledit premier module matériel (24) délivre ledit signal d'entrée d'origine, dans lequel ledit premier signal d'entrée correspond au quatrième signal de sortie du dernier cycle ;
ledit appareil de déchiffrement matériel (1) étant **caractérisé en ce qu'**il comprend également un moyen de commande apte à commander, dans au moins un cycle, à au moins l'un des modules matériels dans l'ensemble de premier, deuxième, troisième et quatrième modules matériels, au cours d'au moins un cycle d'horloge distinct de sa première, deuxième, troisième ou quatrième période de déchiffrement associée respectivement, de générer une puissance d'embrouillage en vue d'empêcher une attaque par analyse de puissance contre ladite structure de déchiffrement itératif à 4 blocs pipelinée, tout en commandant à au moins un autre module matériel dans ledit ensemble de fournir en sortie un signal spécifique destiné à être utilisé dans le cadre de la détection, par ladite structure de déchiffrement à 4 blocs pipelinée, d'une attaque par fautes contre ladite structure de déchiffrement itératif à 4 blocs pipelinée, dans lequel ledit moyen de commande comprend au moins une mémoire tampon à trois états (5a-5d) connectée entre les premier et deuxième modules matériels, ou respectivement entre les deuxième et troisième modules matériels, ou troisième et quatrième modules matériels, ou quatrième et premier modules matériels, ladite mémoire tampon à trois états (5a-5d) étant apte à être maintenue dans un état de haute impédance en vue de commander audit au moins l'un des modules matériels dans l'ensemble de générer ladite puissance d'embrouillage.

7. Appareil de déchiffrement matériel (2) selon la revendication 6, dans lequel ledit appareil de déchiffrement est sur la même puce que ledit appareil de chiffrement matériel (1).

8. Procédé de commande d'un appareil de chiffrement matériel (1) apte à chiffrer un signal d'entrée d'origine en un signal de sortie chiffré, en utilisant un algorithme de standard de chiffrement avancé, AES, à N cycles, ledit appareil de chiffrement matériel (1) comprenant :
- un module « KeyExpansion » matériel (10) apte à générer une clé ronde sur la base d'une clé d'entrée ;
- une structure de chiffrement itératif à 4 blocs pipelinée comprenant :
∘ un premier module matériel (11) conçu de manière à exécuter une fonction « AddRoundKey » en mettant en oeuvre une opération booléenne OU exclusif sur un premier signal d'entrée avec un deuxième signal d'entrée, et à délivrer un résultat de ladite fonction « AddRoundKey » sous la forme d'un premier signal de sortie ;
∘ un deuxième module matériel (12) apte à recevoir un troisième signal d'entrée, à exécuter une fonction « SubBytes » sur ledit troisième signal d'entrée et à délivrer un résultat de ladite fonction « SubBytes » sous la forme d'un deuxième signal de sortie ;
∘ un troisième module matériel (13) apte à recevoir un quatrième signal d'entrée, à exécuter une fonction « ShiftRows » sur ledit quatrième signal d'entrée et à délivrer un résultat de ladite fonction « ShiftRows » sous la forme d'un troisième signal de sortie ; et
∘ un quatrième module matériel (14) apte à recevoir un cinquième signal d'entrée, à exécuter une fonction « MixColumns » sur ledit cinquième signal et à délivrer un résultat de ladite fonction « MixColumns » sous la forme d'un quatrième signal de sortie, dans lequel ledit procédé met en oeuvre les étapes ci-dessous consistant à :
- séquencer ladite structure de chiffrement itératif à 4 blocs pipelinée de manière à chiffrer ledit signal d'entrée d'origine en ledit signal de sortie chiffré au cours d'un traitement de chiffrement, en utilisant ledit algorithme de standard AES à N cycles, dans lequel, pour chaque cycle, lesdits premier à quatrième modules matériels (11-14) chiffrent successivement leur signal d'entrée respectif, au cours des première à quatrième périodes de chiffrement associées respectives dans quatre cycles d'horloge successifs et délivrent leur signal de sortie chiffré respectif, et dans lequel ledit module « KeyExpansion » matériel (10) génère une nouvelle clé ronde à chaque cycle de quatre horloges, dans lequel :
∘ pour chaque cycle, ledit troisième signal d'entrée correspond au premier signal de sortie, ledit quatrième signal d'entrée correspond au deuxième signal de sortie et le cinquième signal d'entrée correspond au troisième signal de sortie ;
∘ pour un premier cycle, ledit premier signal d'entrée correspond audit signal d'entrée d'origine et ledit deuxième signal d'entrée correspond à ladite clé d'entrée ;
∘ pour chaque cycle subséquent jusqu'au dernier cycle, ledit premier signal d'entrée correspond au quatrième signal de sortie du cycle précédent et ledit deuxième signal d'entrée correspond à une clé ronde ;
∘ pour ledit dernier cycle, ledit troisième signal de sortie est transmis par ledit quatrième module matériel (14), sans transformation, sous la forme d'un quatrième signal de sortie ;
∘ un passage supplémentaire au cours d'un cycle d'horloge supplémentaire à travers ledit premier module matériel (11) délivre ledit signal de sortie chiffré, dans lequel ledit premier signal d'entrée correspond au quatrième signal de sortie du dernier cycle ; ledit procédé étant **caractérisé en ce qu'**il met également en oeuvre une étape consistant à commander, dans au moins un cycle, à au moins l'un des modules matériels dans l'ensemble de premier, deuxième, troisième et quatrième modules matériels, au cours d'au moins un cycle d'horloge distinct de sa première, deuxième, troisième ou quatrième période de chiffrement associée respectivement, de générer une puissance d'embrouillage en vue d'empêcher une attaque par analyse de puissance contre ladite structure de chiffrement itératif à 4 blocs pipelinée, tout en commandant, à au moins un autre module matériel dans ledit ensemble, de fournir en sortie un signal spécifique destiné à être utilisé dans le cadre de la détection, par ladite structure de chiffrement à 4 blocs pipelinée, d'une attaque par fautes contre ladite structure de chiffrement itératif à 4 blocs pipelinée, à travers la commande d'au moins une mémoire tampon à trois états (5a-5d) connectée entre les premier et deuxième modules matériels, ou respectivement entre les deuxième et troisième modules matériels, ou troisième et quatrième modules matériels, ou quatrième et premier modules matériels, ladite mémoire tampon à trois états (5a-5d) étant apte à être maintenue dans un état de haute impédance en vue de commander audit au moins l'un des modules matériels dans l'ensemble de générer ladite puissance d'embrouillage.

9. Procédé de commande d'un appareil de déchiffrement matériel (2) apte à déchiffrer un signal d'entrée chiffré en un signal d'origine, en utilisant un algorithme de standard de déchiffrement avancé, AES, à N cycles, ledit appareil de déchiffrement matériel (2) comprenant :
- un module « KeyExpansion » matériel (20) apte à générer une clé ronde sur la base d'une clé d'entrée ;
- une structure de déchiffrement itératif à 4 blocs pipelinée comprenant :
∘ un premier module matériel (24) conçu de manière à exécuter une fonction « AddRoundKey » en mettant en oeuvre une opération booléenne OU exclusif sur un premier signal d'entrée avec un deuxième signal d'entrée et à délivrer un résultat de ladite fonction « AddRoundKey » sous la forme d'un premier signal de sortie ;
∘ un deuxième module matériel (25) apte à recevoir un troisième signal d'entrée, à exécuter une fonction « MixColumns » inverse sur ledit troisième signal d'entrée et à délivrer un résultat de ladite fonction « MixColumns » inverse sous la forme d'un deuxième signal de sortie ;
∘ un troisième module matériel (22) apte à recevoir un quatrième signal d'entrée, à exécuter une fonction « ShiftRows » inverse sur ledit quatrième signal d'entrée et à délivrer un résultat de ladite fonction « ShiftRows » inverse sous la forme d'un troisième signal de sortie ; et
∘ un quatrième module matériel (23) apte à recevoir un cinquième signal d'entrée, à exécuter une fonction « SubBytes » inverse sur ledit cinquième signal et à délivrer un résultat de ladite fonction « SubBytes » inverse sous la forme d'un quatrième signal de sortie, dans lequel ledit procédé met en oeuvre les étapes ci-dessous consistant à :
- séquencer ladite structure de déchiffrement itératif à 4 blocs pipelinée en vue de déchiffrer ledit signal d'entrée chiffré en ledit signal d'origine au cours d'un traitement de déchiffrement, en utilisant ledit algorithme de standard AES à N cycles, dans lequel, pour chaque cycle, lesdits premier à quatrième modules matériels (22-25) déchiffrent successivement leur signal d'entrée respectif, au cours de première à quatrième périodes de déchiffrement associées respectives dans quatre cycles d'horloge successifs et délivrent leur signal de sortie déchiffré respectif, et dans lequel ledit module « KeyExpansion » matériel (20) génère une nouvelle clé ronde à chaque cycle de quatre horloges, dans lequel :
∘ pour chaque cycle, ledit troisième signal d'entrée correspond au premier signal de sortie, ledit quatrième signal d'entrée correspond au deuxième signal de sortie hormis pour le premier cycle, et le cinquième signal d'entrée correspond au troisième signal de sortie ;
∘ pour le premier cycle, ledit premier signal d'entrée correspond audit signal de sortie chiffré, ledit deuxième signal d'entrée correspond à une première clé ronde et le quatrième signal d'entrée correspond audit premier signal de sortie transmis par le deuxième module matériel (25), sans transformation ;
∘ pour chaque cycle subséquent y compris le dernier cycle, ledit premier signal d'entrée correspond au quatrième signal de sortie du cycle précédent et ledit deuxième signal d'entrée correspond à une clé ronde ; et
∘ un passage supplémentaire au cours d'un cycle d'horloge supplémentaire à travers ledit premier module matériel (21) fournit ledit signal d'origine, dans lequel ledit premier signal d'entrée correspond au quatrième signal de sortie du dernier cycle ;
ledit procédé étant **caractérisé en ce qu'**il met également en oeuvre une étape consistant à commander, dans au moins un cycle, à au moins un module matériel dans l'ensemble de premier, deuxième, troisième et quatrième modules matériels, au cours d'au moins un cycle d'horloge distinct de sa première, deuxième, troisième ou quatrième période de déchiffrement associée respectivement, de générer une puissance d'embrouillage en vue d'empêcher une attaque par analyse de puissance contre ladite structure de déchiffrement itératif à 4 blocs pipelinée, tout en commandant, à au moins un autre module matériel dans ledit ensemble, de fournir en sortie un signal spécifique destiné à être utilisé dans le cadre de la détection, par ladite structure de déchiffrement à 4 blocs pipelinée, d'une attaque par fautes contre ladite structure de déchiffrement itératif à 4 blocs pipelinée, à travers la commande d'au moins une mémoire tampon à trois états (5a-5d) connectée entre les premier et deuxième modules matériels, ou respectivement entre les deuxième et troisième modules matériels, ou troisième et quatrième modules matériels, ou quatrième et premier modules matériels, ladite mémoire tampon à trois états (5a-5d) étant apte à être maintenue dans un état de haute impédance en vue de commander audit au moins l'un des modules matériels dans l'ensemble de générer ladite puissance d'embrouillage.
